# FASCICULE DE BREVET EUROPEEN

(11) **EP 3 187 828 B1**
(45) Date de publication et mention de la délivrance du brevet: **22.08.2018**
(21) Numéro de dépôt: 16206252.5
(22) Date de dépôt: 22.12.2016
(51) Int. Cl.: G01C 23/00

(54) **PROCEDE DE REPRESENTATION GRAPHIQUE DE LA POSITION RELATIVE DU CIEL ET DE LA TERRE DANS UN SYSTEME DE VISUALISATION DE BORD POUR AERONEF**
GRAFISCHES DARSTELLUNGSVERFAHREN DER RELATIVEN POSITION DES HIMMELS UND DER ERDE IN EINEM BORD-ANZEIGESYSTEM FÜR LUFTFAHRZEUG
METHOD FOR GRAPHICALLY REPRESENTING THE RELATIVE POSITION OF THE SKY AND THE GROUND IN AN ON-BOARD DISPLAY SYSTEM FOR AN AIRCRAFT

(30) Priorité: 29.12.2015 FR 1502717
(43) Date de publication de la demande: 05.07.2017
(73) Titulaire: Thales, 92400 Courbevoie (FR)
(72) Inventeur: MONVOISIN, Emmanuel, 33187 LE HAILLAN Cedex (FR); MARIANI, Pierre, 33187 LE HAILLAN Cedex (FR); FRESTEL, Norbert, 33187 LE HAILLAN Cedex (FR); LUX, Johanna, 33187 LE HAILLAN Cedex (FR)
(74) Mandataire: Bréda, Jean-Marc

(56) Documents cités:
- EP-A2- 2 679 961
- US-A- 6 028 536
- US-A1- 2010 141 482

## Description

Le domaine de l'invention est celui des interfaces homme-système pour des applications aéronautiques, et plus particulièrement celui des systèmes de visualisation comportant une symbologie d'aide au pilotage et à la navigation couplée avec une représentation synthétique du paysage extérieur.

Les planches de bord des aéronefs modernes possèdent un système de visualisation comportant plusieurs dispositifs de visualisation. Un ou plusieurs dispositifs de visualisation affichent les informations nécessaires au pilotage ou à la navigation. Les informations affichées proviennent des capteurs de l'appareil, d'un système de géolocalisation du type « GPS », acronyme de « Global Positioning System » et du système inertiel de l'appareil. L'ensemble du système de mesure fournit au moins les paramètres suivants : position de l'aéronef en latitude, longitude et altitude et orientation de l'aéronef en tangage, roulis et cap. Ces écrans d'affichage sont connus sous l'appellation anglo-saxonne de « Primary Flight Display » dont l'acronyme est « PFD ».

Généralement, ces écrans comportent également une représentation synthétique du paysage extérieur. Cette représentation est issue d'un système dit « SVS », acronyme de « Synthetic Vision System ». Un système SVS comporte une base de données cartographique représentative du terrain survolé, un système de géolocalisation et des moyens de calcul graphiques. L'image affichée est une vue tridimensionnelle de l'extérieur représentée de la façon la plus réaliste possible. Le point de vue affiché est dans l'axe de l'appareil. Ces écrans peuvent aussi afficher, à la place du SVS, une image réelle du paysage extérieur, issue d'un système dit « EVS », acronyme de « Enhanced Vision System », ou afficher cette image réelle en superposition sur la vue synthétique du paysage extérieur, on parle alors de « CVS », acronyme de « Combined Vision System ».

Lorsque l'écran PFD comporte une image synthétique du paysage, un grand nombre d'informations sont représentées et il essentiel que, lorsqu'une situation anormale se produit, le pilote en ait conscience le plus rapidement possible. Cela se produit notamment lorsque le porteur est en attitude inusuelle, par exemple lorsque le roulis ou le tangage de l'appareil sont trop élevés. La mise en attitude inusuelle peut survenir pour diverses raisons comme, par exemple, la perte des références visuelles extérieures par mauvais temps ou l'inattention du pilote soumis à une charge de travail trop importante ou à la recherche d'un repère au sol. Cette position en attitude inusuelle peut, de plus, être aggravée s'il y a un écart entre les perceptions visuelles et sensorielles du pilote et les indications instrumentales. Cet écart peut venir d'une panne sur les indications instrumentales ou d'une mauvaise interprétation des sensations physiques du pilote.

Pour assister le pilote pour sortir d'une attitude inusuelle, l'affichage sur le PFD est d'une grande importance. Il doit permettre au pilote de retrouver facilement ses repères, notamment l'orientation de l'avion par rapport au ciel et à la terre. Ceci est encore moins évident lorsque l'image synthétique n'affiche que du terrain, situation dite de « brown-over-brown », ou que du ciel, situation dite de « blue-over-blue », ou encore une portion de ciel et une portion de mer, toutes deux représentées en bleu, même si les bleus sont sensiblement différents.

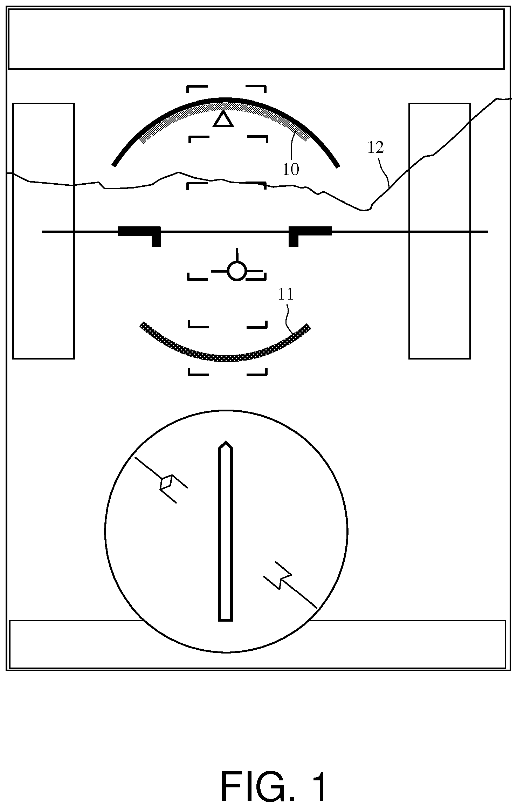

Pour aider le pilote à savoir où se trouvent le ciel et la terre en attitudes inusuelles, il est courant d'avoir un affichage permanent de deux arcs de cercles 10 et 11, un arc bleu côté ciel et un arc marron côté terre, comme montré sur la figure 1 qui représente de façon schématique un écran PFD. Par souci de clarté, sur cette figure, l'image du terrain est symbolisée par une simple ligne de crête 12 et la symbologie est très simplifiée. Cette représentation comporte plusieurs inconvénients. En mode nominal, ces arcs de cercles sont inutiles et surchargent donc l'affichage. En mode dégradé correspondant aux attitudes inusuelles, ils ne sont pas suffisamment visibles et n'apportent donc pas toute l'aide nécessaire au pilote.

Pour surmonter ces inconvénients, d'autres solutions ont été proposées. Ainsi, le brevet US 7 724 155 intitulé "Graphical methods for enhancing attitude awareness" propose diverses solutions graphiques permettant d'indiquer la séparation ciel/terre. Dans une première configuration, l'information ciel/terre est en périphérie de la zone d'affichage et n'est donc pas dans la zone primaire dans laquelle regarde le pilote. Il se peut alors que le pilote ne fasse pas suffisamment attention à cette information. De plus, en cas d'attitude inusuelle, seule une petite portion correspondant au ciel ou à la terre est visible, car la séparation des deux portions est déterminée par la position de la ligne représentant l'indicateur d'assiette longitudinal nulle, encore appelé « ZPRL », acronyme anglo-saxon signifiant « Zero Pitch Reference Line ». Le pilote a besoin de plus de temps pour assimiler l'information et comprendre l'orientation de l'avion. Dans une seconde configuration, l'information ciel/terre est de part et d'autre de la ZPRL. Elle est bien dans la zone primaire dans laquelle regarde le pilote mais la bande d'information est fine, les deux informations sont donc très rapprochées, il est alors possible que le pilote ne fasse pas suffisamment bien la distinction entre ce qui est au dessus et ce qui est en dessous de la ZPRL. De plus, dans des conditions où la position de la ZPRL est en bordure d'écran, l'information ciel/terre n'est plus dans la zone primaire dans laquelle regarde le pilote. Là encore, il est possible que le pilote ne fasse pas suffisamment attention à cette information.

La demande US 2010/0141482 intitulé "System and method for rendering a primary flight display" propose des solutions voisines de celles décrites ci-dessus et présente les mêmes inconvénients.

Le brevet US 8 767 013 intitulé "System and method for rendering a sky veil on a vehicle display" décrit un affichage où le ciel est présenté en semi-transparence pour éviter les situations dite de « brown-over-brown ». Cependant, lorsque la position de la ZPRL est en bordure d'écran, seule une petite portion correspondant au ciel ou à la terre est visible, le pilote a besoin de plus de temps pour assimiler l'information et comprendre l'orientation de l'avion. De plus, la couleur du ciel transparent est identique à la couleur du ciel synthétique, rendant le ciel transparent non discernable du ciel synthétique et donc l'information plus confuse.

Le procédé selon l'invention ne présente pas ces inconvénients. En effet, l'affichage Terre/Ciel n'est pas présenté constamment mais uniquement lorsque la situation l'exige. Par ailleurs, sa représentation évolue en fonction de la criticité de la situation. Plus précisément, l'invention a pour objet un procédé de représentation graphique de la position relative du ciel et de la terre dans un système de visualisation de bord pour aéronef, ladite représentation graphique étant affichée sur un écran de visualisation comportant les informations de pilotage et de navigation dudit aéronef superposées à une représentation synthétique tridimensionnelle du paysage extérieur ou à une image réelle du paysage extérieur, caractérisé en ce que ladite représentation graphique n'est affichée que lorsque l'attitude de l'aéronef est inusuelle, une attitude inusuelle correspondant à une valeur de roulis ou à une valeur de tangage située en dehors d'une première plage de valeurs nominales.

Avantageusement, la représentation graphique comporte au moins deux modes de représentation différents, le premier mode de représentation correspondant à des valeurs de roulis ou de tangages situées en dehors d'une première plage de valeurs nominales, le second mode de représentation correspondant à des valeurs de roulis ou de tangages situées en dehors d'une seconde plage de valeurs, supérieure à la première plage de valeurs nominales.

Avantageusement, le premier mode de représentation comporte deux formes allongées identiques, opaques et de couleur différente, situées symétriquement sur un cercle concentrique avec le cercle portant l'échelle de roulis, la rotation des deux formes étant asservie à la rotation de la ligne représentant l'indicateur d'assiette longitudinal nulle.

Avantageusement, le premier mode de représentation comporte deux segments de disque de forme identique, opaques et de couleur différente, chaque segment de disque étant limité par un arc de cercle et un segment droit joignant les extrémités dudit arc de cercle, les deux segments de disques étant situés symétriquement sur un cercle portant une échelle de roulis, les segments droits des deux segments de disque étant parallèles à la ligne représentant l'indicateur d'assiette longitudinal nulle, la rotation des deux segments de disque étant asservie à la rotation de ladite ligne représentant l'indicateur d'assiette longitudinal nulle.

Avantageusement, la largeur du segment de disque est comprise entre 15% et 25% de la longueur du segment droit.

Avantageusement, le second mode de représentation comporte les deux segments de disque précédents et deux zones de forme identiques semi-transparentes et de couleurs différentes, les deux zones étant situées symétriquement sur le cercle portant l'échelle de roulis, la première zone s'étendant entre le segment droit du premier segment de disque et la ligne représentant l'indicateur d'assiette longitudinal nulle, sans jamais sortir de la zone définie par les segments droits du premier et du second segments de disque, la seconde zone s'étendant entre le segment droit du second segment de disque et la ligne représentant l'indicateur d'assiette longitudinal nulle, sans jamais sortir de la zone définie par les segments droits du premier et du second segments de disque.

Avantageusement, lorsque la valeur de roulis est située en dehors d'une troisième plage de valeurs, inférieure à la première plage de valeurs nominales, l'échelle de roulis s'élargit, continument ou discrètement, de façon croissante avec la valeur de roulis.

Avantageusement, la première plage de valeur de roulis est comprise entre - 45 degrés et + 45 degrés, la seconde plage de valeurs de roulis est comprise entre - 50 degrés et + 50 degrés, la première plage de valeur de tangage est comprise entre - 12,5 degrés et + 15 degrés, la seconde plage de valeurs de tangage est comprise entre - 25 degrés et + 25 degrés.

Avantageusement, le dispositif de visualisation comporte une fonction permettant d'éviter les changements de mode intempestifs.

Avantageusement, le dispositif de visualisation comporte une image réelle du paysage extérieur en superposition sur la vue synthétique du paysage extérieur.

Avantageusement, le dispositif de visualisation est un des écrans de la planche de bord de l'aéronef.

Avantageusement, le dispositif de visualisation est un dispositif de visualisation dit « Tête Haute » comportant un élément optique superposant l'image synthétique et/ou l'image réelle sur le paysage extérieur.

L'invention sera mieux comprise et d'autres avantages apparaîtront à la lecture de la description qui va suivre donnée à titre non limitatif et grâce aux figures annexées parmi lesquelles :
La figure 1 représente un écran PFD selon l'art antérieur ;
La figure 2 représente une première représentation d'un écran PFD selon l'invention ;
La figure 3 représente une seconde représentation d'un écran PFD selon l'invention ;
La figure 4 représente une troisième représentation d'un écran PFD selon l'invention ;
La figure 5 représente une quatrième représentation d'un écran PFD selon l'invention ;
La figure 6 représente une cinquième représentation d'un écran PFD selon l'invention.

Le procédé selon l'invention est mis en oeuvre dans un système avionique de bord d'aéronef. Ce système comporte au moins des capteurs permettant de déterminer l'attitude de l'aéronef, son altitude et plus généralement l'ensemble des paramètres nécessaires au pilotage et à la navigation. Ce système avionique comporte également un système SVS comprenant une base de données cartographique représentative du terrain survolé et/ou un système EVS comprenant notamment des capteurs infrarouges, un système de géolocalisation et des moyens de calcul graphiques. L'image affichée est une vue tridimensionnelle de l'extérieur représentée de la façon la plus réaliste possible ou une image réelle du paysage extérieur issue des capteurs EVS. Le point de vue affiché est dans un axe compris entre le cap et la direction de vol de l'appareil. L'ensemble de ces informations est affiché sur au moins un des écrans de la planche de bord de l'aéronef. Cet écran est classiquement appelé PFD. Cet écran PFD comporte donc un grand nombre d'informations.

Aussi, dans le procédé selon l'invention, les informations permettant de déterminer parfaitement la position de l'aéronef par rapport à l'horizon ne sont pas affichées en permanence mais uniquement en cas de situation critique. Dans la suite de la description, on appelle ces informations ciel-terre ou « ADI », acronyme de « Attitude Directional Indicator ». Cette solution présente le double avantage de ne pas surcharger l'affichage lorsque les paramètres de vol sont nominaux et, à l'inverse d'avoir un affichage bien apparent lorsque l'aéronef est en situation inusuelle. On entend par situation inusuelle, une attitude de l'aéronef correspondant à une valeur de roulis ou à une valeur de tangage située en dehors d'une première plage de valeurs nominales. Pour donner des ordres de grandeur, une situation est jugée inusuelle si le roulis est en dehors d'une première plage comprise entre - 45 degrés et + 45 degrés et/ou le tangage est en dehors d'une première plage de valeur comprise entre - 12,5 degrés et + 15 degrés. Ces valeurs dépendent du type d'appareil et des conditions de vol imposées par l'avionneur.

Ces informations ciel-terre peuvent être affichées de différentes façons. Une solution avantageuse est d'afficher des formes ou des symboles rappelant la forme de l'« horizon » qui indique basiquement l'attitude. Ces formes ou symboles peuvent être des portions de disque, des arcs de cercle, des « haricots », des rectangles, ou toute autre forme géométrique allongée. Ces deux formes peuvent être différentes selon qu'une représente le ciel et l'autre la terre, et elles ont deux textures suffisamment différentes pour ne pas être confondues. Cela peut être, de façon non exhaustive, deux couleurs différentes ou deux motifs de remplissage différents, avec un niveau de transparence configurable.

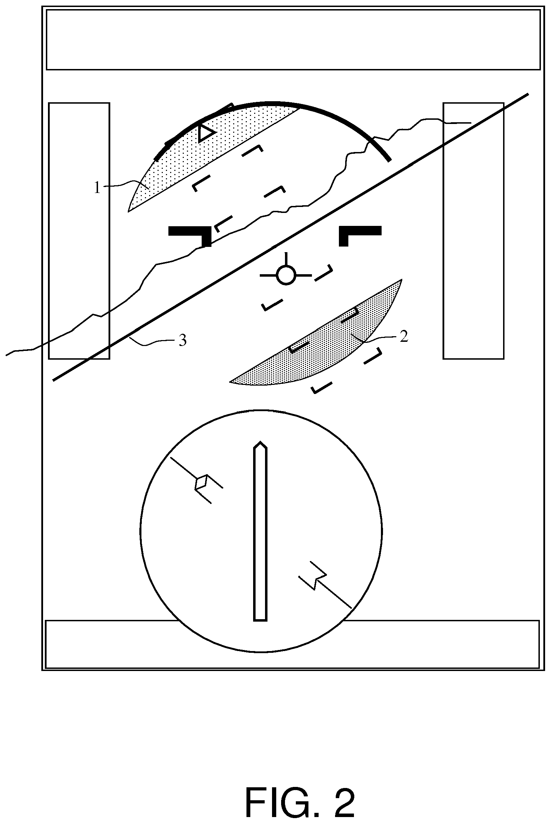

Dans la solution préférée, les informations ciel-terre sont composées comme on le voit sur la figure 2 de deux segments de disque de forme identique 1 et 2, opaques et de couleurs différentes, chaque segment de disque étant limité par un arc de cercle et un segment droit joignant les extrémités dudit arc de cercle. Les deux segments de disques sont situés symétriquement sur un cercle concentrique avec le cercle portant l'échelle de roulis, les segments droits des deux segments de disque étant parallèles à la ligne représentant l'indicateur d'assiette longitudinal nulle, indicateur dit ZPRL et noté 3 sur la figure 2.

Généralement, le segment de disque représentant le ciel est de couleur bleu et le segment de disque représentant la terre de couleur brune. La largeur des segments de disque est comprise entre 15% et 25% de la longueur des segments droits. Il est préférable que la couleur de la portion de disque représentant le ciel soit différente de la couleur du ciel synthétique issu de la représentation SVS de façon que le ciel ADI soit discernable du ciel synthétique. Cette présentation est plus facilement perceptible que si les deux couleurs sont identiques, car elle permet de bien voir, grâce à l'apparition des informations à partir d'un certain seuil, que le porteur est dans une attitude inusuelle.

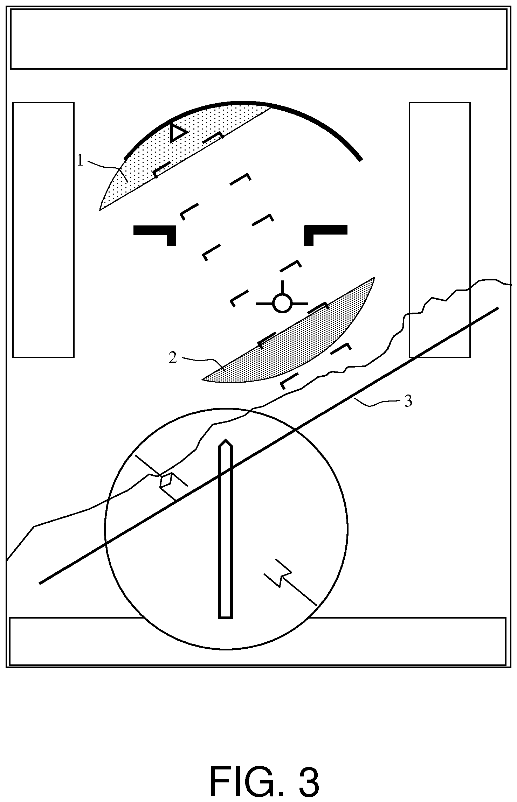

La rotation des deux segments de disque est asservie à la rotation de la ligne représentant l'indicateur d'assiette longitudinal nulle. Dans le cas où la ZPRL passe au milieu de la zone définie par les deux positions de portions de disque, la portion correspondant au ciel est superposée au ciel de la vue synthétique et à une partie du terrain qui se trouve au-dessus de la ZPRL et la portion correspondant à la terre est superposée au terrain de la vue synthétique. Cependant, les deux segments tournent dans un cercle dont la position est constante de façon à rester constamment dans le champ visuel central du pilote quelque soit la position de la ZPRL. Ainsi, comme on le voit sur la figure 3, dans des conditions où la position de la ZPRL est en bordure d'écran, les deux portions de disque restent bien dans la zone primaire dans laquelle regarde le pilote.

Un autre avantage est que cette solution permet aussi de savoir où se trouvent le ciel et la terre en cas de simples conditions de « brown-over-brown » et « blue-over-blue ». Il suffit pour cela de définir les conditions correspondantes pour déclencher l'affichage du mode dégradé de l'ADI.

Il est possible d'ajouter un mode dégradé intermédiaire avant l'apparition des secteurs ciel/terre. Ce mode apparaît en cas de fort roulis et entraîne un élargissement progressif ou discret de l'échelle de roulis. Les seuils de roulis définissant ce mode intermédiaire sont inférieurs aux seuils précédents.

Au-delà d'une seconde plage de roulis ou de tangage de l'aéronef, un second mode de représentation apparaît. Il comporte les deux secteurs ciel/terre précédents et deux zones ciel/terre comprises entre les deux secteurs ciel/terre, séparées par la ligne représentant l'indicateur d'assiette longitudinal nulle. Ces deux formes peuvent être différentes selon qu'une représente le ciel et l'autre la terre et elles ont deux textures suffisamment différentes pour ne pas être confondues. Cela peut être, de façon non exhaustive, deux couleurs différentes ou deux motifs de remplissage différents, avec un niveau de transparence configurable pouvant aller jusqu'à l'opacité totale. Ce paramètre de transparence peut notamment permettre un affichage progressif de l'ADI, au-delà de la seconde plage de roulis ou de tangage de l'aéronef.

Dans une solution préférée, les deux formes apparaissant dans le second mode de représentation sont de formes similaires semi-transparentes et de couleurs différentes, les deux zones étant situées symétriquement par rapport à la ligne représentant l'indicateur d'assiette longitudinal nulle sur un cercle concentrique à celui portant l'échelle de roulis, la première zone s'étendant entre le segment droit du premier segment de disque et la ligne représentant l'indicateur d'assiette longitudinal nulle, sans jamais sortir de la zone définie par les segments droits du premier et du second segments de disque, la seconde zone s'étendant entre le segment droit du second segment de disque et la ligne représentant l'indicateur d'assiette longitudinal nulle, sans jamais sortir de la zone définie par les segments droits du premier et du second segments de disque.

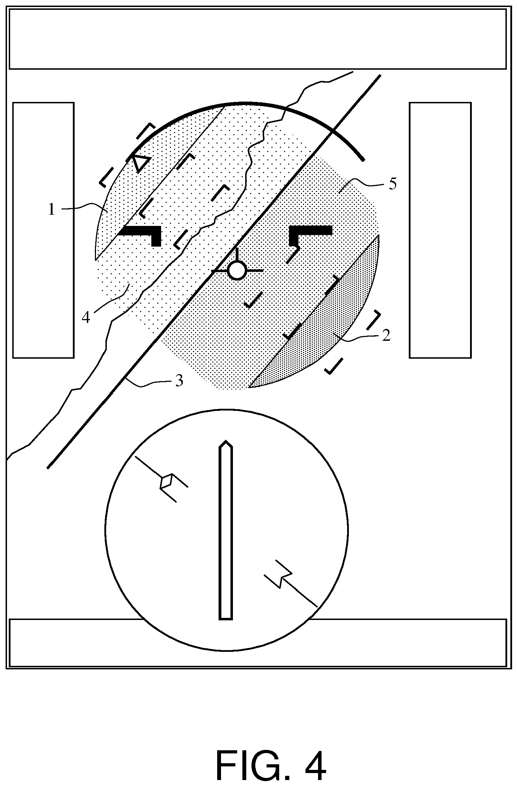

Cette dernière configuration est représentée sur les figures 4, 5 et 6. Les zones ciel/terre sont notées 4 et 5 sur ces trois figures. La ligne représentant l'indicateur d'assiette longitudinal nulle, indicateur dit ZPRL est notée 3. Cette ligne délimite la frontière entre les deux zones. Ces zones sont de couleur identique ou voisine de celle du segment de disque auquel elles sont associées qui sont le ciel ou la terre. Pour donner des ordres de grandeur, le second mode apparaît si le roulis est en dehors d'une seconde plage comprise entre - 50 degrés et + 50 degrés et/ou le tangage est en dehors d'une seconde plage comprise entre - 25 degrés et + 25 degrés. Comme les valeurs précédentes, ces valeurs dépendent du type d'appareil et des conditions de vol imposées par l'avionneur.

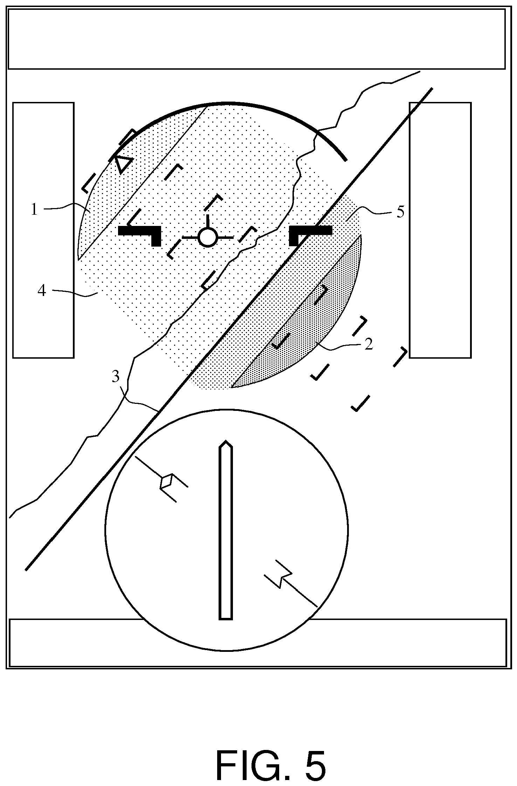

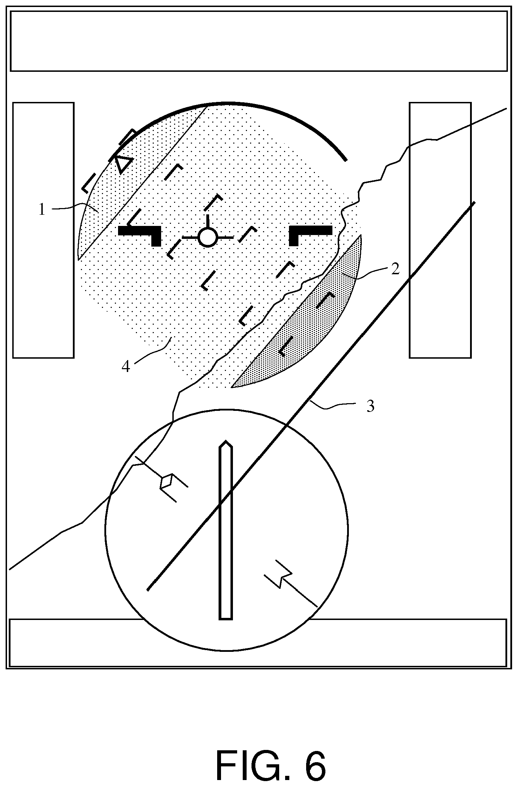

Sur la figure 4, la ZPRL passe au centre des deux zones 4 et 5 qui sont de taille identique. Sur la figure 5, la ZPRL est proche du segment de disque 2. La zone 4 est plus grande que la zone 5. Sur la figure 6, la ZPRL est en dehors de l'espace situé entre les segments de disque 1 et 2. Dans ce dernier cas, la zone 4 occupe tout l'espace situé entre les deux segments de disque. La zone 5 n'est plus représentée.

Avantageusement, l'apparition et la disparition des modes de représentation d'attitude inusuelle sont gérées par une fonction d'hystérésis de façon à éviter les changements de mode intempestifs. Les valeurs seuils sur ces fonctions d'hystérésis dépendent aussi du type de porteur et des choix de l'avionneur.

## Revendications

1. Procédé de représentation graphique de la position relative du ciel et de la terre dans un système de visualisation de bord pour aéronef, ladite représentation graphique (1, 2, 4, 5) étant affichée sur un écran de visualisation comportant les informations de pilotage et de navigation dudit aéronef superposées à une représentation synthétique tridimensionnelle du paysage extérieur ou à une image réelle du paysage extérieur, **caractérisé en ce que** ladite représentation graphique n'est affichée que lorsque l'attitude de l'aéronef est inusuelle, une attitude inusuelle correspondant à une valeur de roulis ou à une valeur de tangage située en dehors d'une première plage de valeurs nominales.

2. Procédé de représentation graphique selon la revendication 1, **caractérisé en ce que** la représentation graphique comporte au moins deux modes de représentation différents, le premier mode de représentation (1, 2) correspondant à des valeurs de roulis ou de tangages située en dehors d'une première plage de valeurs nominales, le second mode de représentation (4, 5) correspondant à des valeurs de roulis ou de tangages située en dehors d'une seconde plage de valeurs, supérieure à la première plage de valeurs nominales.

3. Procédé de représentation graphique selon l'une des revendications précédentes, **caractérisé en ce que** le premier mode de représentation comporte deux formes allongées identiques, opaques et de couleur différente, situées symétriquement sur un cercle concentrique avec le cercle portant l'échelle de roulis, la rotation des deux formes étant asservie à la rotation de la ligne représentant l'indicateur d'assiette longitudinal nulle.

4. Procédé de représentation graphique selon la revendication 3, **caractérisé en ce que** le premier mode de représentation comporte deux segments de disque (1, 2) de forme identique, opaques et de couleur différente, chaque segment de disque étant limité par un arc de cercle et un segment droit joignant les extrémités dudit arc de cercle, les deux segments de disques étant situés symétriquement sur un cercle concentrique avec le cercle portant l'échelle de roulis, les segments droits des deux segments de disque étant parallèles à la ligne représentant l'indicateur d'assiette longitudinal nulle, la rotation des deux segments de disque étant asservie à la rotation de ladite ligne représentant l'indicateur d'assiette longitudinal nulle.

5. Procédé de représentation graphique selon la revendication 4, **caractérisé en ce que** la largeur du segment de disque est comprise entre 15% et 25% de la longueur du segment droit.

6. Procédé de représentation graphique selon la revendication 4, **caractérisé en ce que** le second mode de représentation comporte les deux segments de disque précédents et deux zones (4, 5) de forme identique semi-transparentes et de couleurs différentes, les deux zones étant situées symétriquement par rapport à la ligne représentant l'indicateur d'assiette longitudinal nulle sur un cercle concentrique à celui portant l'échelle de roulis, la première zone s'étendant entre le segment droit du premier segment de disque et la ligne représentant l'indicateur d'assiette longitudinal nulle, sans jamais sortir de la zone définie par les segments droits du premier et du second segments de disque, la seconde zone s'étendant entre le segment droit du second segment de disque et la ligne représentant l'indicateur d'assiette longitudinal nulle, sans jamais sortir de la zone définie par les segments droits du premier et du second segments de disque.

7. Procédé de représentation graphique selon l'une des revendications précédentes, **caractérisé en ce que**, lorsque la valeur de roulis est située en dehors d'une troisième plage de valeurs, inférieure à la première plage de valeurs nominales, l'échelle de roulis s'élargit continument ou discrètement, de façon croissante avec la valeur de roulis.

8. Procédé de représentation graphique selon l'une des revendications précédentes, **caractérisé en ce que** la première plage de valeur de roulis est comprise entre - 45 degrés et + 45 degrés, la seconde plage de valeurs de roulis est comprise entre - 50 degrés et + 50 degrés, la première plage de valeur de tangage est comprise entre - 12,5 degrés et + 15 degrés, la seconde plage de valeurs de tangage est comprise entre - 25 degrés et + 25 degrés.

9. Procédé de représentation graphique selon l'une des revendications précédentes, **caractérisé en ce que** le dispositif de visualisation comporte une fonction permettant d'éviter les changements de mode intempestifs.

10. Procédé de représentation graphique selon l'une des revendications précédentes, **caractérisé en ce que** le dispositif de visualisation comporte une image réelle du paysage extérieur en superposition sur la vue synthétique du paysage extérieur.

11. Procédé de représentation graphique selon l'une des revendications précédentes, **caractérisé en ce que** le dispositif de visualisation est un des écrans de la planche de bord de l'aéronef.

12. Procédé de représentation graphique selon l'une des revendications 1 à 11, **caractérisé en ce que** le dispositif de visualisation est un dispositif de visualisation dit « Tête Haute » comportant un élément optique superposant l'image synthétique et/ou l'image réelle sur le paysage extérieur.

## Patentansprüche

1. Verfahren zur grafischen Darstellung der relativen Stellung des Himmels und der Erde in einem Bordanzeigesystem für ein Luftfahrzeug, wobei die grafische Darstellung (1, 2, 4, 5) auf einem Bildschirm angezeigt wird, der die auf eine synthetische dreidimensionale Darstellung der Außenlandschaft oder auf ein wirkliches Bild der Außenlandschaft überlagerten Steuerungs- und Navigationsinformationen des Luftfahrzeugs aufweist, **dadurch gekennzeichnet, dass** die grafische Darstellung nur angezeigt wird, wenn die Lage des Luftfahrzeugs ungewöhnlich ist, wobei eine ungewöhnliche Lage einem Rollwert oder einem Nickwert entspricht, der sich außerhalb des ersten Nennwertebereichs befindet.

2. Verfahren zur grafischen Darstellung nach Anspruch 1, **dadurch gekennzeichnet, dass** die grafische Darstellung mindestens zwei unterschiedliche Darstellungsmodi aufweist, wobei der erste Darstellungsmodus (1, 2) den außerhalb eines ersten Nennwertebereichs befindlichen Roll- oder Nickwerten entspricht, wobei der zweite Darstellungsmodus (4, 5) den außerhalb eines zweiten Nennwertebereichs, der größer als der erste Nennwertebereich ist, befindlichen Roll- oder Nickwerten entspricht.

3. Verfahren zur grafischen Darstellung nach einem der vorhergehenden Ansprüche, **dadurch gekennzeichnet, dass** der erste Darstellungsmodus zwei langgestreckte identische Formen aufweist, undurchsichtig und mit unterschiedlicher Farbe, die sich symmetrisch auf einem Kreis befinden, der zu dem Kreis konzentrisch ist, der die Rollskala trägt, wobei die Drehung der beiden Formen von der Drehung der Linie gesteuert wird, die den longitudinalen Nulltrimmungsanzeiger darstellt.

4. Verfahren zur grafischen Darstellung nach Anspruch 3, **dadurch gekennzeichnet, dass** der erste Darstellungsmodus zwei Scheibensegmente (1, 2) gleicher Form aufweist, undurchsichtig und mit unterschiedlicher Farbe, wobei jedes Scheibensegment durch einen Kreisbogen und ein gerades Segment begrenzt wird, das die Enden des Kreisbogens verbindet, wobei die beide Scheibensegmente auf einem konzentrischen Kreis symmetrisch angeordnet werden, wobei der Kreis die Rollskala trägt, wobei die geraden Segmente der beide Scheibensegmente parallel zu der Linie sind, die den longitudinalen Nulltrimmungsanzeiger darstellt, wobei die Drehung der beiden Scheibensegmente der Drehung der Linie nachgeführt wird, die den longitudinalen Nulltrimmungsanzeiger darstellt.

5. Verfahren zur grafischen Darstellung nach Anspruch 4, **dadurch gekennzeichnet, dass** die Breite des Scheibensegments zwischen 15 % und 25 % der Länge des geraden Segments liegt.

6. Verfahren zur grafischen Darstellung nach Anspruch 4, **dadurch gekennzeichnet, dass** der zweite Darstellungsmodus die beiden vorhergehenden Scheibensegmente und zwei Zonen (4, 5) gleicher halbdurchlässiger Form und unterschiedlicher Farben aufweist, wobei die beiden Zonen bezüglich der Linie, die den longitudinalen Nulltrimmungsanzeiger auf einem konzentrischen Kreis darstellt, der die Rollskala trägt, symmetrisch angeordnet werden, wobei sich die erste Zone zwischen dem geraden Segment des ersten Scheibensegments und der Linie erstreckt, die den longitudinalen Nulltrimmungsanzeiger darstellt, ohne jemals aus der durch die geraden Segmente des ersten und des zweiten Scheibensegments definierten Zone auszutreten, wobei sich die zweite Zone zwischen dem geraden Segment des zweiten Scheibensegments und der Linie erstreckt, die den longitudinalen Nulltrimmungsanzeiger darstellt, ohne jemals aus der durch die geraden Segmente des ersten und des zweiten Scheibensegments definierten Zone auszutreten.

7. Verfahren zur grafischen Darstellung nach einem der vorhergehenden Ansprüche, **dadurch gekennzeichnet, dass**, wenn sich der Rollwert außerhalb eines dritten Wertebereichs befindet, der kleiner als der erste Nennwertebereich ist, die Rollskala sich kontinuierlich oder diskret auf mit dem Rollwert ansteigende Weise vergrößert.

8. Verfahren zur grafischen Darstellung nach einem der vorhergehenden Ansprüche, **dadurch gekennzeichnet, dass** der erste Rollwertebereich zwischen - 45 Grad und + 45 Grad liegt, der zweite Rollwertebereich zwischen - 50 Grad und + 50 Grad liegt, der erste Nickwertebereich zwischen - 12,5 Grad und + 15 Grad liegt, der zweite Nickwertebereich zwischen - 25 Grad und + 25 Grad liegt.

9. Verfahren zur grafischen Darstellung nach einem der vorhergehenden Ansprüche, **dadurch gekennzeichnet, dass** die Beobachtungsvorrichtung eine Funktion aufweist, die die ungewollten Modusänderungen zu vermeiden erlaubt.

10. Verfahren zur grafischen Darstellung nach einem der vorhergehenden Ansprüche, **dadurch gekennzeichnet, dass** die Beobachtungsvorrichtung ein die synthetische Sicht der Außenlandschaft überlagerndes wirkliches Bild der Außenlandschaft aufweist.

11. Verfahren zur grafischen Darstellung nach einem der vorhergehenden Ansprüche, **dadurch gekennzeichnet, dass** die Beobachtungsvorrichtung einer der Bildschirme des Instrumentenbretts des Luftfahrzeugs ist.

12. Verfahren zur grafischen Darstellung nach einem der Ansprüche 1 bis 11, **dadurch gekennzeichnet, dass** die Beobachtungsvorrichtung eine als "Head-Up" bezeichnete Beobachtungsvorrichtung ist, die ein optisches Element aufweist, das das synthetische Bild und/oder das wirkliche Bild auf der Außenlandschaft überlagert.

## Claims

1. A method for graphically representing the relative position of the sky and of the earth in an on-board display system for aircraft, said graphical representation (1, 2, 4, 5) being displayed on a display screen comprising the piloting and navigation information for said aircraft superimposed on a three-dimensional synthetic representation of the outside landscape or on a real image of the outside landscape, **characterised in that** said graphical representation is only displayed when the attitude of the aircraft is unusual, with an unusual attitude corresponding to a roll value or to a pitch value located outside a first range of nominal values.

2. The graphical representation method as claimed in claim 1, **characterised in that** the graphical representation comprises at least two different representation modes, the first representation mode (1, 2) corresponding to roll or pitch values located outside a first range of nominal values, the second representation mode (4, 5) corresponding to roll or pitch values located outside a second range of values, higher than the first range of nominal values.

3. The graphical representation method as claimed in any one of the preceding claims, **characterised in that** the first representation mode comprises two identical elongate shapes, that are opaque and of different colour, symmetrically located on a circle concentric with the circle bearing the roll scale, the rotation of the two shapes being slaved to the rotation of the line representing the zero longitudinal trim indicator.

4. The graphical representation method as claimed in claim 3, **characterised in that** the first representation mode comprises two disc segments (1, 2) of identical shape, that are opaque and of different colour, each disc segment being limited by an arc of a circle and a straight segment joining the ends of said arc of a circle, the two disc segments being symmetrically located on a circle concentric with the circle bearing the roll scale, the straight segments of the two disc segments being parallel to the line representing the zero longitudinal trim indicator, the rotation of the two disc segments being slaved to the rotation of said line representing the zero longitudinal trim indicator.

5. The graphical representation method as claimed in claim 4, **characterised in that** the width of the disc segment is between 15% and 25% of the length of the straight segment.

6. The graphical representation method as claimed in claim 4, **characterised in that** the second representation mode comprises the two preceding disc segments and two areas (4, 5) of identical shape that are semi-transparent and of different colours, the two areas being symmetrically located relative to the line representing the zero longitudinal trim indicator on a circle concentric with the circle bearing the roll scale, the first area extending between the straight segment of the first disc segment and the line representing the zero longitudinal trim indicator, without ever leaving the area defined by the straight segments of the first and of the second disc segments, the second area extending between the straight segment of the second disc segment and the line representing the zero longitudinal trim indicator, without ever leaving the area defined by the straight segments of the first and of the second disc segments.

7. The graphical representation method as claimed in any one of the preceding claims, **characterised in that**, when the roll value is located outside a third range of values, lower than the first range of nominal values, the roll scale is continually or discretely widened, so as to increase with the roll value.

8. The graphical representation method as claimed in any one of the preceding claims, **characterised in that** the first roll value range is between -45 degrees and +45 degrees, the second roll value range is between -50 degrees and +50 degrees, the first pitch value range is between -12.5 degrees and +15 degrees, the second pitch value range is between -25 degrees and +25 degrees.

9. The graphical representation method as claimed in any one of the preceding claims, **characterised in that** the display device comprises a function allowing unintentional mode changes to be avoided.

10. The graphical representation method as claimed in any one of the preceding claims, **characterised in that** the display device comprises a real image of the outside landscape superimposed on the synthetic view of the outside landscape.

11. The graphical representation method as claimed in any one of the preceding claims, **characterised in that** the display device is one of the screens of the aircraft instrument panel.

12. The graphical representation method as claimed in any one of claims 1 to 11, **characterised in that** the display device is a "Heads Up" display device comprising an optical element superimposing the synthetic image and/or the real image on the outside landscape.
